# EUROPEAN PATENT APPLICATION

(11) **EP 2 518 674 A1**
(43) Date of publication of application: **31.10.2012**
(21) Application number: 10839577.3
(22) Date of filing: 24.12.2010
(51) Int. Cl.: G06Q 30/00

(54) **SYSTEM FOR DETERMINING APPROPRIATENESS OF PRODUCT SCHEDULED FOR PURCHASING**

(30) Priority: 24.12.2009 JP 2009291898
(71) Applicant: Rakuten, Inc., Tokyo 140-0002 (JP)
(72) Inventor: YAMAHARA Hisanori, Tokyo 140-0002 (JP)
(74) Representative: Price, Christopher
(86) International application number: PCT/JP2010/073401
(87) International publication number: WO 2011/078348

(57) **Abstract**

Provided is a system for preventing shopping mistakes from occurring. A combination evaluation unit (702) evaluates a combination of an additional purchase candidate product received by a purchase candidate receiving unit (701) and an existing purchase candidate product stored in advance in a purchase candidate storage unit (703), and specifies data to call attention suitable for the evaluation result. Then, a purchase candidate confirmation screen creation unit (704) creates a purchase candidate confirmation screen containing the data to call attention. An order request receiving unit (708) receives an order request and then registers a purchase candidate as order information.

## Description

### Technical Field

The present invention relates to a system for determining the appropriateness of a product to be purchased that evaluates the appropriateness of a combination of products intended for purchase which are placed in a so-called shopping cart of a home shopping site and issues an alert.

### Background Art

Patent Literature 1 (ELECTRONIC COMMERCE METHOD AND ELECTRONIC COMMERCE SYSTEM) discloses the electronic commerce method and electronic commerce system in which a product selected by a customer is always displayed on a shop-by-shop basis even when the display screen of product information is changed to the display screen of other product information.

Because the technique includes a step of displaying a shopping cart screen for each shop which maintains its state even when the display screen of product information is changed to the display screen of other product information, a plurality of products are displayed on the shopping cart screen.

In this manner, in the case of purchasing many products, depending on a combination of products, there can be potential problems such as causing a danger due to its usage (a combination of chlorine bleach and acid detergent) and being unusable due to the absence of compatibility (a combination of a specific game machine and software intended for another game machine). No consideration has been given for such potential problems.

### Citation List

### Patent Literature

PTL 1: JP 2008-123098 A

### Summary of Invention

### Technical Problem

An object of the present invention is to provide a system that evaluates the appropriateness of a combination of products intended to be purchased that are placed in a shopping cart, and, when the products are in an inappropriate combination, calls attention so as to prevent shopping mistakes from occurring.

Another object of the present invention is to provide a system that generates an evaluation table in advance each time a product intended to be purchased is added to a shopping cart so as to make a prompt evaluation on the appropriateness of an added product even when a plurality of products are placed in a shopping cart.

### Solution to Problem

A home shopping server according to the present invention is a home shopping server connectable to a user terminal through Internet, which includes a purchase candidate product storage unit that receives input of a purchase candidate product from the user terminal and stores the purchase candidate product; an evaluation table generation unit that, upon receiving input of the purchase candidate product, generates an evaluation table to evaluate a combination for the purchase candidate product by reference to a product table that stores appropriateness of a combination of purchase candidate products; a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit; an attention attracting screen creation unit that, when the combination is evaluated to be inappropriate by the combination evaluation unit, creates an attention attracting screen on which data to call attention is set; and an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.

A purchase candidate product evaluation method according to the present invention is a purchase candidate product evaluation method executed by a home shopping server connectable to a user terminal through Internet, which includes a purchase candidate product storage step of receiving input of a purchase candidate product from the user terminal and storing the purchase candidate product into a purchase candidate product storage unit; an evaluation table generation step of, upon receiving input of the purchase candidate product, generating an evaluation table to evaluate a combination for the purchase candidate product by reference to a product table that stores appropriateness of a combination of purchase candidate products; a combination evaluation step of, upon receiving input of an additional purchase candidate product to be added to the purchase candidate product storage unit, evaluating appropriateness of a combination of an existing purchase candidate product stored in the purchase candidate product storage unit and the additional purchase candidate product by reference to the evaluation table generated in the evaluation table generation step; an attention attracting screen creation step of, when the combination is evaluated to be inappropriate in the combination evaluation step, creating an attention attracting screen on which data to call attention is set; and an evaluation table update step of, when the combination is evaluated to be appropriate in the combination evaluation step, generating an evaluation table for both purchase candidate products by merging an evaluation table for the existing purchase candidate product and an evaluation table for the additional purchase candidate product by reference to a product table that stores appropriateness of a combination for the additional purchase candidate product.

A program according to the present invention is a program causing a computer to function as a home shopping server connectable to a user terminal through Internet, the server including a purchase candidate product storage unit that receives input of a purchase candidate product from the user terminal and stores the purchase candidate product; an evaluation table generation unit that, upon receiving input of the purchase candidate product, generates an evaluation table to evaluate a combination for the purchase candidate product by reference to a product table that stores appropriateness of a combination of purchase candidate products; a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit; an attention attracting screen creation unit that, when the combination is evaluated to be inappropriate by the combination evaluation unit, creates an attention attracting screen on which data to call attention is set; and an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.

A computer-readable recording medium according to the present invention has a program recorded thereon, the program causing a computer to function as a home shopping server connectable to a user terminal through Internet, the server including a purchase candidate product storage unit that receives input of a purchase candidate product from the user terminal and stores the purchase candidate product; an evaluation table generation unit that, upon receiving input of the purchase candidate product, generates an evaluation table to evaluate a combination for the purchase candidate product by reference to a product table that stores appropriateness of a combination of purchase candidate products; a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit; an attention attracting screen creation unit that, when the combination is evaluated to be inappropriate by the combination evaluation unit, creates an attention attracting screen on which data to call attention is set; and an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.

According to the present invention, each time input of an additional purchase candidate product is received, the evaluation table to evaluate a combination of purchase candidate products is generated by reference to the product table. The evaluation table is generated when a product is added to an empty shopping cart and when a product is further added to a shopping cart in which a product is already placed. Therefore, at the time when input of an additional purchase candidate product is received, the evaluation table is already generated, and an evaluation about the appropriateness is made immediately upon receiving input of the additional purchase candidate product. Then, when it is evaluated to be inappropriate as a result of the evaluation by reference to the evaluation table, an attention attracting screen is created.

In the home shopping server according to the present invention, the combination evaluation unit may have an inappropriate product definition table that stores an evaluation target product, an inappropriate product whose combination with the evaluation target product is inappropriate, and data to call attention indicating description of inappropriateness in association with one another, and when the additional purchase candidate product corresponds to the evaluation target product and the existing purchase candidate product corresponds to the inappropriate product, the combination evaluation unit may specify the associated data to call attention. In this case, it is preferred to generate the data to call attention indicating description of inappropriateness in the evaluation table in advance.

In the home shopping server according to the present invention, the combination evaluation unit may have an appropriate product definition table that stores an evaluation target product, a check product category for an evaluation of a combination with the evaluation target product, an appropriate product whose combination with the evaluation target product is appropriate, and data to call attention indicating appropriateness of the evaluation target product in association with one another, and when the additional purchase candidate product corresponds to the evaluation target product, the existing purchase candidate product fits into the check product category, and the existing purchase candidate product does not correspond to the appropriate product, the combination evaluation unit may specify the associated data to call attention. In this case, it is preferred to generate the data to call attention indicating appropriateness in the evaluation table in advance.

In the home shopping server according to the present invention, when an attribute of the additional purchase candidate product and an attribute of the existing purchase candidate product are different, the combination evaluation unit may specify data to call attention indicating that the attributes are different. In this case, it is preferred to generate the data to call attention indicating that the attributes are different in the evaluation table in advance.

The home shopping server according to the present invention may further have a product table that stores an attribute for each product, and the combination evaluation unit may specify an attribute of the additional purchase candidate product and an attribute of the existing purchase candidate product based on the product table.

The home shopping server according to the present invention may further include a product page storage unit that stores a product page configured to display an attribute of a product as tag information and transmit the tag information together with a product purchase candidate; a product page request receiving unit that receives a product page request from the user terminal; and a product page transmitting unit that, when the product page request is received, reads a product page from the product page storage unit and transmits the product page, and the combination evaluation unit may specify an attribute of the additional purchase candidate product and an attribute of the existing purchase candidate product using the attribute contained in the purchase candidate.

### Advantageous Effects of Invention

According to the present invention, because an evaluation is made on a combination of an additional purchase candidate product and an existing purchase candidate product, and data to call attention which is suitable for the evaluation result is displayed on the purchase candidate confirmation screen, it is possible to prevent shopping mistakes from occurring. Even when a purchaser is not careful or knowledgeable enough, since a problem arising from a combination can be alerted for sure, the purchaser can enjoy shopping with ease.

To evaluate a combination, each time input of an additional purchase candidate product is received, the evaluation table to evaluate a combination of purchase candidate products is generated by reference to the product table. In the case of receiving input of a product from a user terminal, in no case the input of a product is received automatically, and therefore there is more than sufficient time to generate the evaluation table in advance. By generating the evaluation table each time a product is added, when a new product is added, the appropriateness with the product can be evaluated immediately.

Use of the inappropriate product definition table allows a description to call attention indicating that it is an inappropriate product to be defined directly, which can avoid the occurrence of warning errors.

Use of the appropriate product definition table can give users a sense of ease that it is an appropriate product when there is no data to call attention.

If the home shopping server is configured to call attention when attributes are different, it is possible to prevent shopping mistakes in the product field where mistakes are likely to happen due to the problem of compatibility or the like (for example, application software, game software and the like).

### Brief Description of Drawings

Fig. 1 is a diagram showing a network configuration of a purchase candidate product evaluation system.
Fig. 2 is a diagram showing an outline of operation of the purchase candidate product evaluation system.
Fig. 3 is a diagram showing an example of a product page.
Fig. 4 is a diagram showing a configuration of a home shopping server regarding product page delivery.
Fig. 5 is a diagram showing a product page delivery process flow.
Fig. 6 is a diagram showing a process flow regarding a purchase candidate and order placement.
Fig. 7 is a diagram showing a configuration of a home shopping server regarding a purchase candidate and order placement.
Fig. 8 is a diagram showing an example of a purchase candidate storage unit (before addition of a purchase candidate) according to a first embodiment.
Fig. 9 is a diagram showing an example of a product page according to the first embodiment.
Fig. 10 is a diagram showing an example of an inappropriate product definition table.
Fig. 11 is a diagram showing a combination evaluation process flow according to the first embodiment.
Fig. 12 is a diagram showing an example of a purchase candidate confirmation screen according to the first embodiment.
Fig. 13 is a diagram showing a purchase candidate confirmation screen creation process flow.
Fig. 14 is a diagram showing an example of a purchase candidate storage unit (after addition of a purchase candidate) according to the first embodiment.
Fig. 15 is a diagram showing an example of an appropriate product definition table.
Fig. 16 is a diagram showing an example (first example) of a product page according to a second embodiment.
Fig. 17 is a diagram showing an example (second example) of a product page according to the second embodiment.
Fig. 18 is a diagram showing an example of a purchase candidate storage unit (before addition of a purchase candidate) according to the second embodiment.
Fig. 19 is a diagram showing a combination evaluation process flow according to the second embodiment.
Fig. 20 is a diagram showing an example of a purchase candidate confirmation screen according to the second embodiment.
Fig. 21 is a diagram showing an example of a purchase candidate storage unit (after addition of a purchase candidate) according to the second embodiment.
Fig. 22 is a diagram showing an example of a product table according to a third embodiment.
Fig. 23 is a diagram showing a combination evaluation process flow according to the third embodiment.
Fig. 24 is a diagram showing an example of a purchase candidate confirmation screen according to the third embodiment.
Fig. 25 is a diagram showing an example (first example) of a product page according to the third embodiment.
Fig. 26 is a diagram showing an example (second example) of a product page according to the third embodiment.
Fig. 27 is a diagram showing a process flow of a product page program.
Fig. 28 is a diagram showing an example of a purchase candidate storage unit (before addition of a purchase candidate) according to a fourth embodiment.
Fig. 29 is a diagram showing an example of a purchase candidate confirmation screen according to the fourth embodiment.

### Description of Embodiments

### First Embodiment

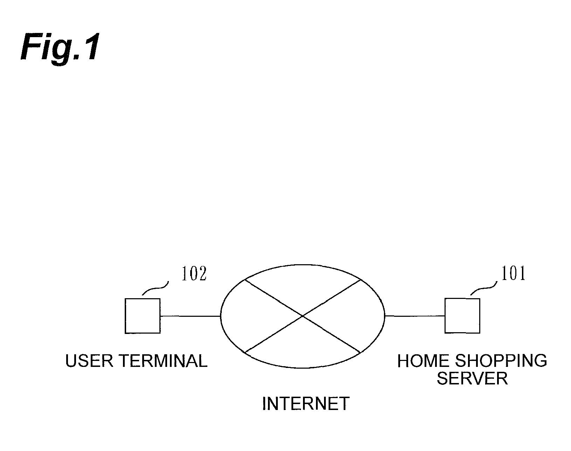

Fig. 1 is a diagram showing a network configuration of a purchase candidate product evaluation system. A home shopping server 101 and a user terminal 102 are connected through the Internet. The home shopping server 101 is a server that runs a home shopping site. The user terminal 102 is a terminal that is used by a user of home shopping, and it has a Web browser that renders pages written in HTML.

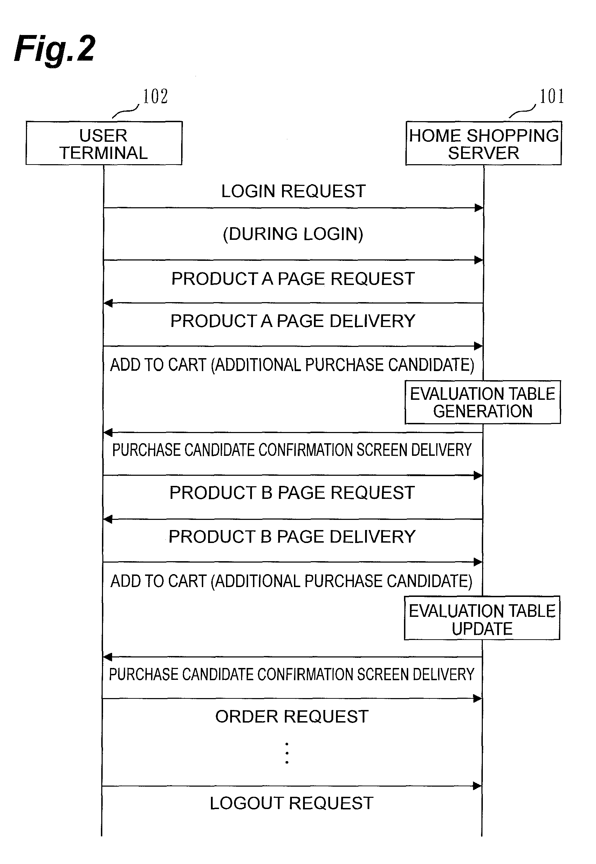

Fig. 2 is a diagram showing an outline of operation of the purchase candidate product evaluation system. The user terminal 102 sends a login request and logs into the home shopping server 101. Then, when a product A page request is sent from the user terminal 102 during login, a product A page is delivered from the home shopping server 101 to the user terminal 102.

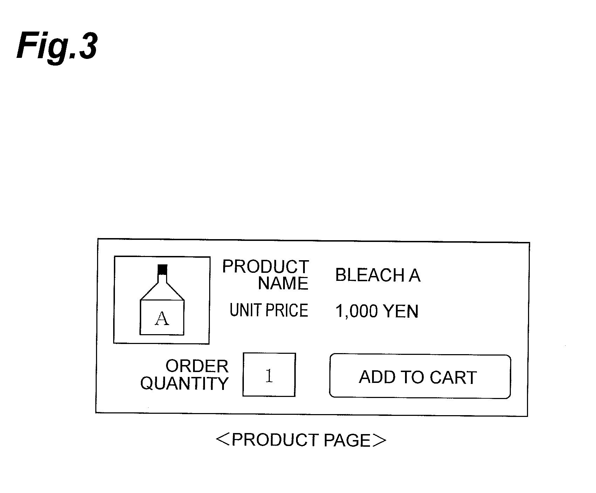

Fig. 3 is a diagram showing an example of a product page. The product page displays a product image, product name and unit price, for example. Further, the product page includes an input box to enter the order quantity and an icon to indicate sending of a purchase candidate request ("Add to Cart" button).

When a product A is selected on the browser of the user terminal 102 and the "Add to Cart" button is clicked, a purchase candidate request is sent from the user terminal 102 to the home shopping server 101. At this time, a product table that stores the appropriateness of a combination of candidate products to be purchased is referred to, and an evaluation table to evaluate a combination of candidate products to be purchased is generated. Then, a purchase candidate confirmation screen is delivered from the home shopping server 101 to the user terminal 102. The same process is performed for other products such as a product B. Although a product table that stores the appropriateness of a combination of candidate products to be purchased is referred to, and an evaluation table to evaluate a combination of candidate products to be purchased is generated for the product B as well, the evaluation table generated in this case is a table to make an evaluation on the appropriateness of a combination of the product A and the product B. Further, when there are additional products such as products C to Z, the evaluation table is updated. Then, when an order request is made from the purchase candidate confirmation screen, the purchase candidate becomes a firm order. Finally, the user terminal 102 sends a logout request and logs out.

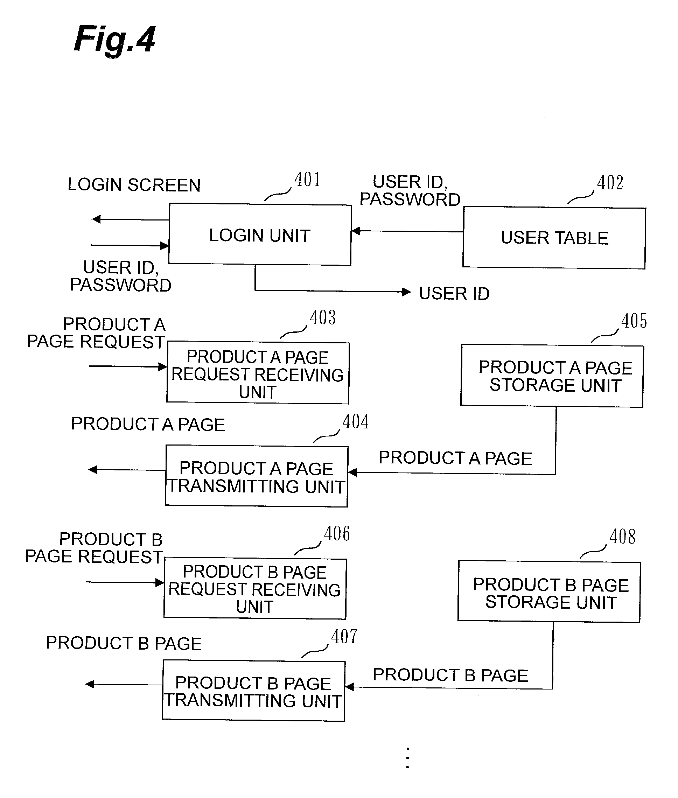

First, product page delivery is described. Fig. 4 is a diagram showing a configuration of a home shopping server regarding product page delivery. A login unit 401 is configured to transmit a login screen, receive a user ID and password, and perform user authentication. A user table 402 stores a user ID and password to be verified by the user authentication in association with each other. A product A page request receiving unit 403 is configured to receive a product A page request from the user terminal 102. A product A page transmitting unit 404 is configured to transmit a product A page to the user terminal 102. A product A page storage unit 405 stores a screen (HTML) of a product A page. A product B page request receiving unit 406 is configured to receive a product B page request from the user terminal 102. A product B page transmitting unit 407 is configured to transmit a product B page to the user terminal 102. A product B page storage unit 408 stores a screen (HTML) of a product B page.

Although an embodiment in which a product page is stored for each product, a page request is received for each product, and page data is transmitted is shown as an example, page information that can be uniquely identified by URL or the like may be received by a single receiving unit, and each page data may be transmitted by a single transmitting unit.

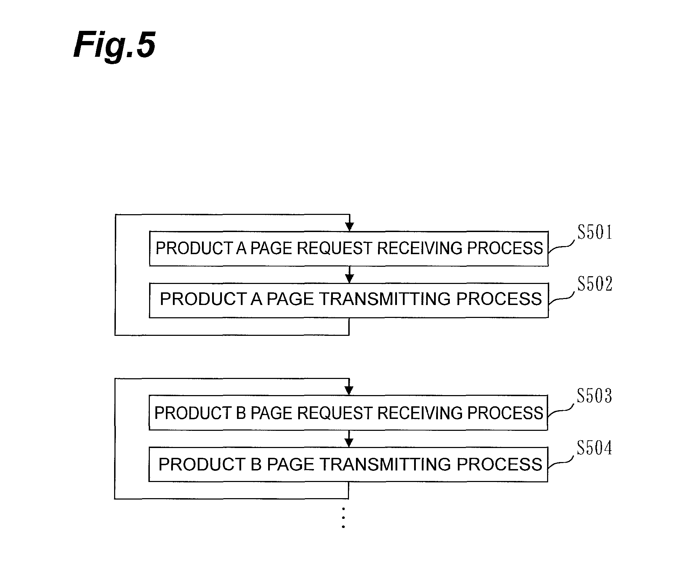

Fig. 5 is a diagram showing a product page delivery process flow. In a product A page request receiving process (S501) by the product A page request receiving unit 403, access to URL of a product A page is accepted, and, in a product A page transmitting process (S502) by the product A page transmitting unit 404, the product A page is transmitted. Then, it returns to the state of waiting to receive a product A page request. Likewise for other products such as a product B, in a product B page request receiving process (S503) by the product B page request receiving unit 406, access to URL of a product B page is accepted, and, in a product B page transmitting process (S504) by the product B page transmitting unit 407, the product B page is transmitted, and then it returns to the state of waiting to receive a request.

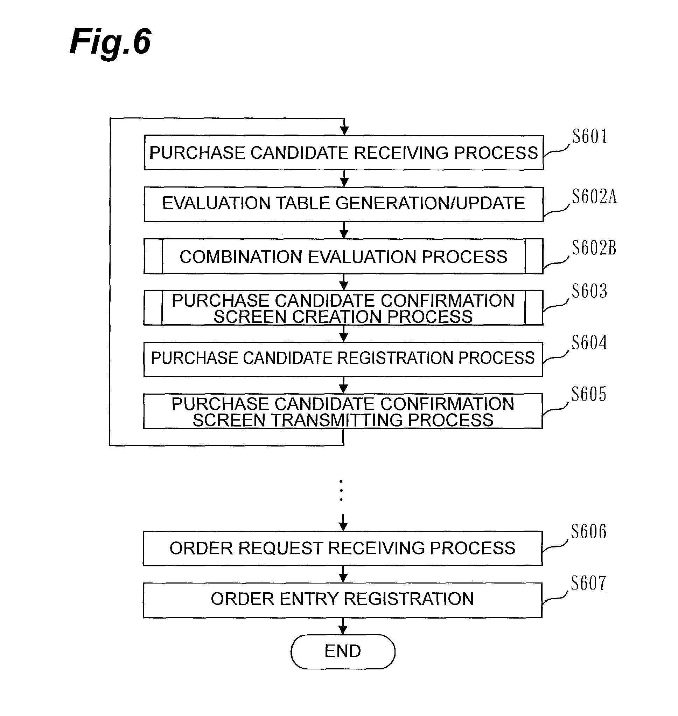

An operation regarding a purchase candidate and order placement is described hereinbelow. Fig. 6 is a diagram showing a process flow regarding a purchase candidate and order placement. When a purchase candidate is received from the user terminal 102 in a purchase candidate receiving process (S601), a product table that stores the appropriateness of a combination with a purchase candidate product is referred to, and an evaluation table to evaluate a combination of purchase candidate products is generated (S602A). In the case where a product is already placed in a shopping cart, a combination of the existing purchase candidate product and an additional purchase candidate product is evaluated in a combination evaluation process (S602B). Then, a purchase candidate confirmation screen is created in a purchase candidate confirmation screen creation process (S603), a purchase candidate is registered in a purchase candidate registration process (S604), and the purchase candidate confirmation screen is sent back to the user terminal 102 in a purchase candidate confirmation screen transmitting process (S605). Then, it returns to the state of waiting to receive a purchase candidate.

The evaluation table is generated not only when the first purchase candidate product is placed into the shopping cart but also when an additional purchase candidate product is placed into the shopping cart. When the additional purchase candidate product is placed into the shopping cart, the already generated evaluation table is updated. To update is to merge the evaluation table for the product already placed in the shopping cart and the evaluation table for the product to be added.

Further, when an order request is received from the user terminal 102 in an order request receiving process (S606), the existing purchase candidate is registered as an order in an order entry registration (S607).

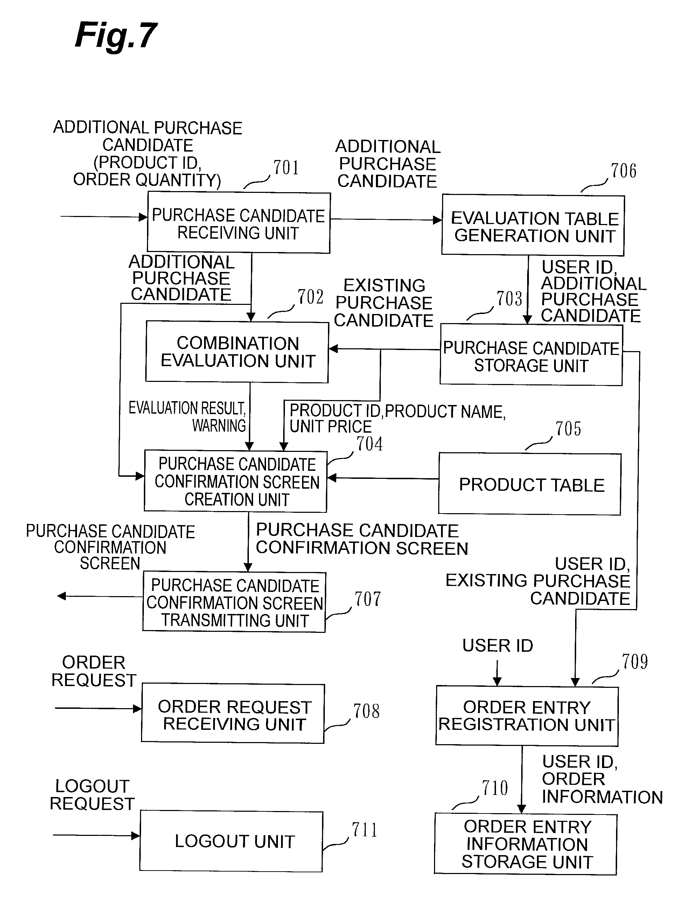

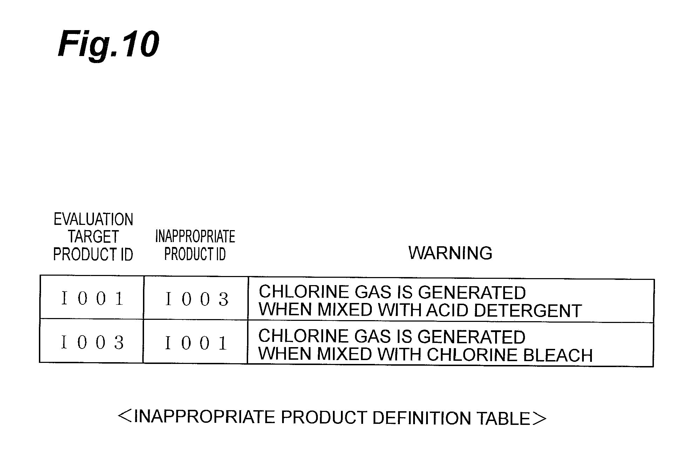

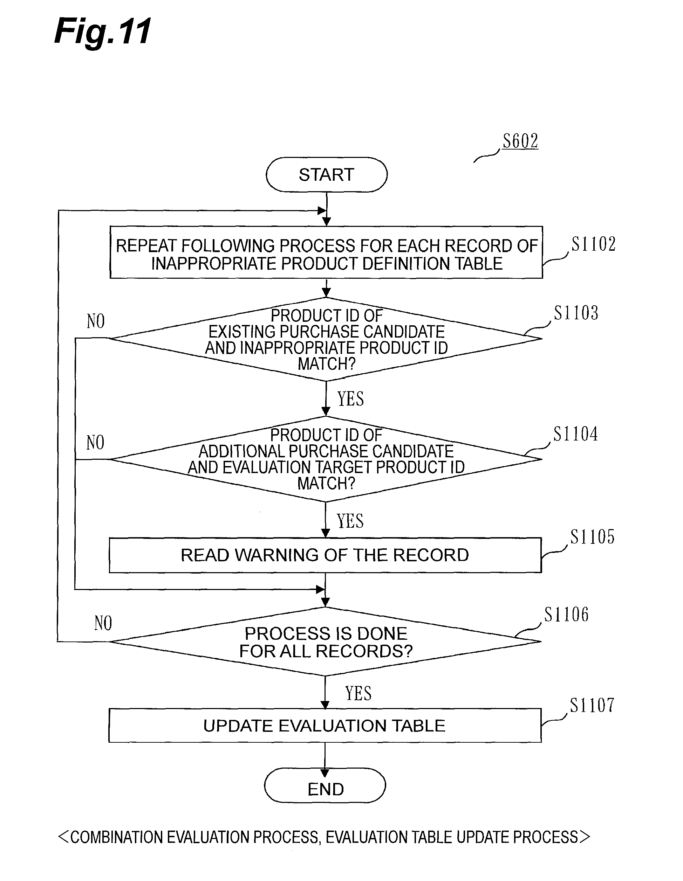

Fig. 7 is a diagram showing a configuration of a home shopping server regarding a purchase candidate and order placement. A purchase candidate receiving unit 701 receives a purchase candidate to be added from the user terminal 102 in a purchase candidate receiving process (S601). The purchase candidate contains a product ID and order quantity. Further, a combination evaluation unit 702 acquires the product ID of an existing purchase candidate from a purchase candidate storage unit 703 and evaluates the appropriateness of a combination with the product ID of the additional purchase candidate received by the purchase candidate receiving unit 701 in a combination evaluation process (S602). The evaluation is described later with reference to Figs. 10 and 11.

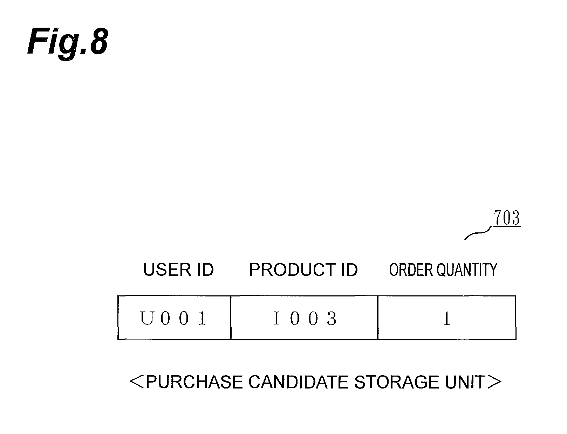

The purchase candidate storage unit 703 is configured to sequentially store the additional purchase candidates received by the purchase candidate receiving unit 701. Fig. 8 is a diagram showing an example of a purchase candidate storage unit (before addition of a purchase candidate) according to a first embodiment. The data that is stored in the purchase candidate storage unit 703 is such that a user ID is embedded in the header, a record is created for each purchase candidate, and the product ID and order quantity are stored in association. In this example, "Detergent C" that is identified by the product ID "I003" is registered as the existing purchase candidate.

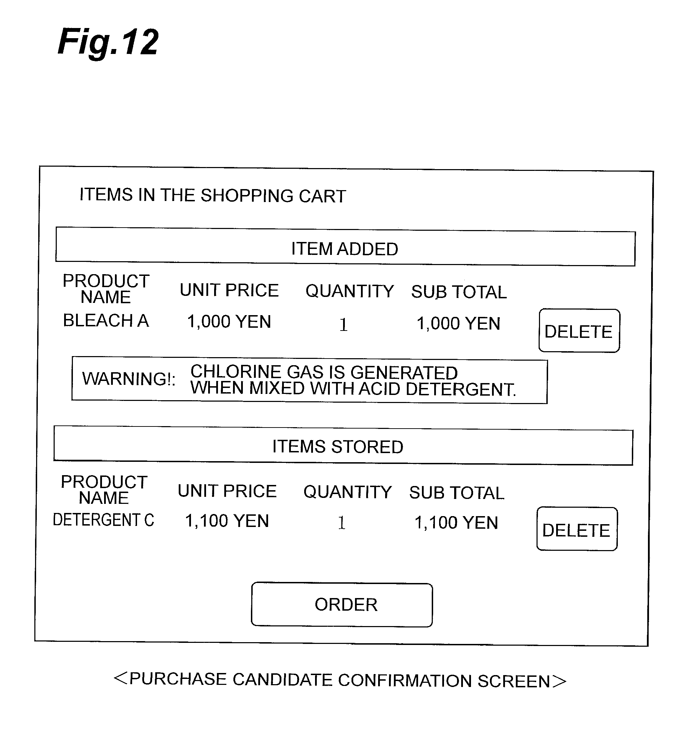

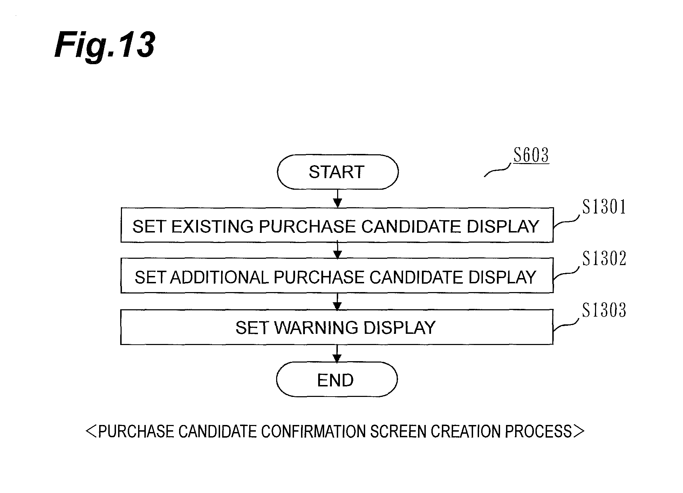

A purchase candidate confirmation screen creation unit 704 creates a purchase candidate confirmation screen which displays the existing purchase candidate, the additional purchase candidate and data to call attention and through which an order request can be sent in a purchase candidate confirmation screen creation process (S603). At this time, the purchase candidate confirmation screen creation unit 704 acquires the existing purchase candidate (product ID and order quantity) from the purchase candidate storage unit 703 and sets them onto the purchase candidate confirmation screen and further sets the additional purchase candidate (product ID and order quantity) received by the purchase candidate receiving unit 701 onto the purchase candidate confirmation screen. The purchase candidate confirmation screen is described later with reference to Figs. 12 and 13.

A product table 705 stores the product ID, product name and unit price in association for each product that can be reserved and purchased.

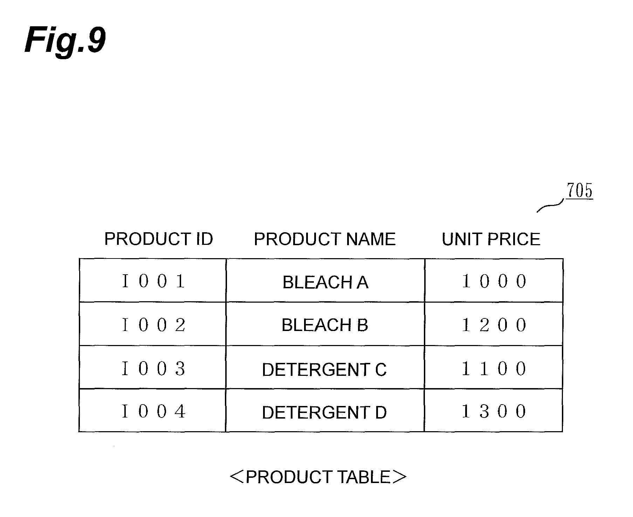

Fig. 9 is a diagram showing an example of a product page according to the first embodiment. The product ID, product name and unit price are stored in association for each product

When a purchase candidate product is input, an evaluation table generation unit 706 generates an evaluation table to evaluate a combination of the purchase candidate products by reference to the product table that stores the appropriateness of a combination of purchase candidate products. When an additional purchase candidate product is input, the evaluation table generation unit 706 generates an evaluation table to evaluate a combination of purchase candidate products by merging the evaluation table for the existing purchase candidate product and the evaluation table for the additional purchase candidate product by reference to the product table that stores the appropriateness of a combination of purchase candidate products. Each time a product is added, the combination evaluation unit 702 evaluates the appropriateness of a combination of the existing product and the additional product by reference to the generated or updated evaluation table.

A purchase candidate confirmation screen transmitting unit 707 sends the purchase candidate confirmation screen generated by the purchase candidate confirmation screen creation unit 704 in the purchase candidate confirmation screen creation process (S605) back to the user terminal 102. An order request receiving unit 708 receives an order request sent by an instruction entered on the purchase candidate confirmation screen in an order request receiving process (S606). An order entry registration unit 709 acquires the existing purchase candidate that corresponds to the authenticated user ID from the purchase candidate storage unit 703 and stores it into the order entry registration unit 709 in an order entry registration (S607). The order entry information storage unit 710 is configured to store order information in association with the user ID. As the order information, the product ID and order quantity are stored in association for each order product. A logout unit 711 operates to execute logout action for disconnection in response to a request from the user terminal 102 or timeout.

The combination evaluation process (S602) by the combination evaluation unit 702 described above is described hereinafter in detail. Fig. 10 is a diagram showing an example of an inappropriate product definition table. For each definition of an inappropriate product, an evaluation target product ID, inappropriate product ID and data to call attention are stored in association. The data to call attention is text data or image of a warning, text data or image of an attention, text data or image of a description that prompts reconsideration and the like, and a plurality of types are prepared for different degrees of risk. The evaluation target product ID identifies a product for which an evaluation on the appropriateness is to be made. The inappropriate product ID identifies a product that becomes inappropriate (or has a risk of becoming inappropriate) when combined with the evaluation target product. The data to call attention is a description that the evaluation target product is inappropriate when combined with the inappropriate product.

Fig. 11 is a diagram showing a combination evaluation process flow according to the first embodiment. The following process is repeated for each of the existing purchase candidate products that are stored in the purchase candidate storage unit 703 (S1101). The following process is repeated for each of the records of the inappropriate product definition table (S1102). When, as a result of referring to the generated evaluation table, the product ID of the existing purchase candidate and the inappropriate product ID match (S 1103) and the product ID of the additional purchase candidate and the evaluation target product ID match (S1104), the combination is determined to be inappropriate, and the data to call attention for the record is read (S1105). After the process is done for all of the records (S 1106), the evaluation table is updated for the added product (S1107).

Fig. 12 is a diagram showing an example of the purchase candidate confirmation screen according to the first embodiment. When Bleach A (I001) is selected, a warning appears indicating that there is a danger of accidental generation of chlorine in relation to Detergent C (I003). When the order icon ("Order") is clicked, an order request is sent to the home shopping server 101.

Fig. 13 is a diagram showing a purchase candidate confirmation screen creation process flow. The existing purchase candidate that is read from the purchase candidate storage unit 703 is set in the display field (S1301), and the additional purchase candidate that is received by the purchase candidate receiving unit 701 is set in the display field (S1302). Further, when an evaluation result by the combination evaluation unit 702 is "inappropriate", the specified data to call attention is set in the display field (S1303).

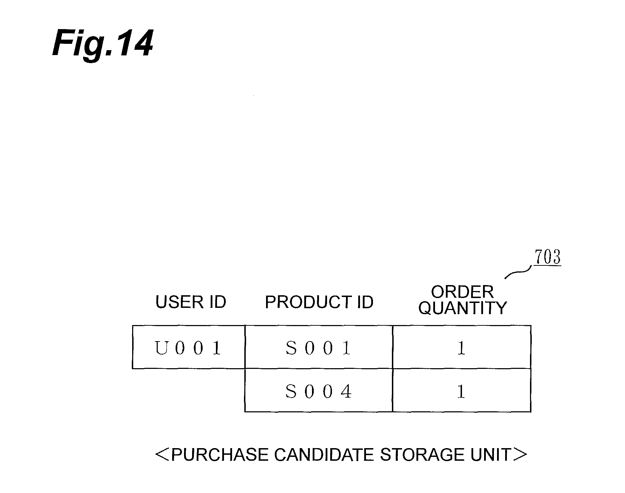

Fig. 14 is a diagram showing an example of the purchase candidate storage unit (after addition of a purchase candidate) according to the first embodiment. In this example, the state where Detergent C (I003) has been cancelled, and Detergent D (I004) is selected instead is shown.

### Second Embodiment

Although an example of making an evaluation to find an inappropriate combination of products is described in the above embodiment, an example of making an evaluation to find an appropriate combination of products is described in the this embodiment.

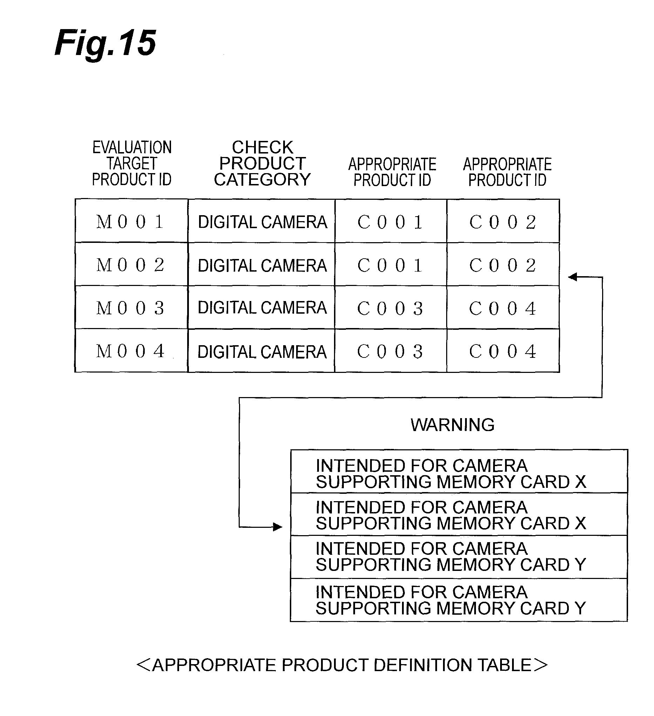

Fig. 15 is a diagram showing an example of an appropriate product definition table. An evaluation target product ID, check product category, appropriate product ID and data to call attention are stored in association. The check product category indicates the product category that requires an evaluation of the appropriateness (whether it is appropriate or inappropriate) with the evaluation target product. This example shows that a memory card (evaluation target product) needs to be evaluated about the appropriateness with a digital camera (check product category). The appropriate product ID indicates the ID of an appropriate product among the products in the check product category (a product other than inappropriate products among the products in the check product category). A plurality of appropriate product IDs may be set. The data to call attention indicates the appropriateness of the evaluation target product in relation to the check product category.

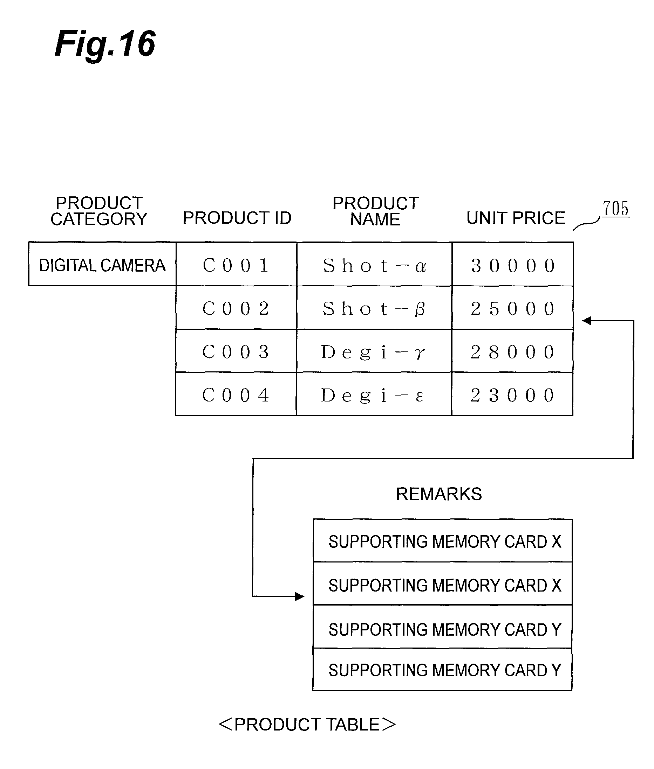

Fig. 16 is a diagram showing an example (first example) of a product page according to the second embodiment. This example is based on the assumption that C001 and C002 are digital cameras that support a memory card X, and C003 and C004 are digital cameras that support a memory card Y

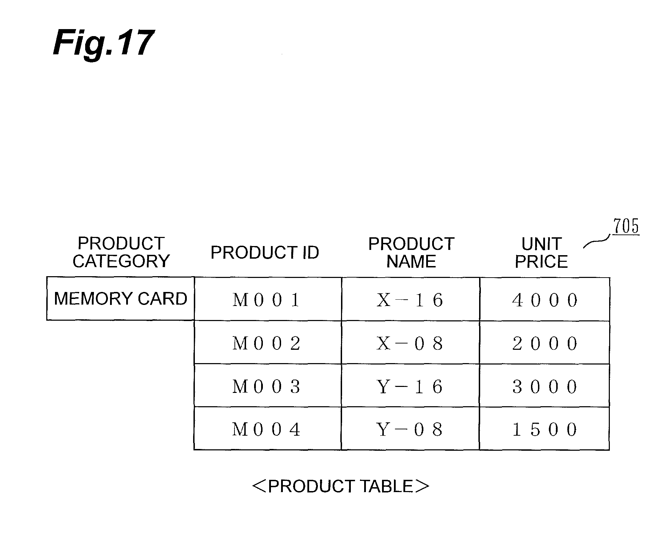

Fig. 17 is a diagram showing an example (second example) of a product page according to the second embodiment. This example is based on the assumption that M001 and M002 are the memory card X, and M003 and M004 are the memory card Y

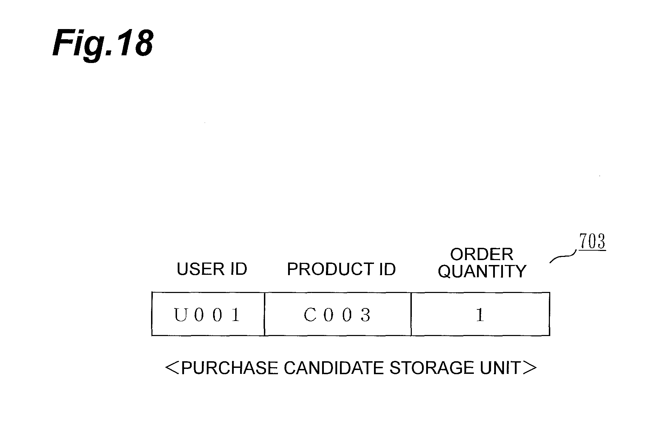

Fig. 18 is a diagram showing an example of a purchase candidate storage unit (before addition of a purchase candidate) according to the second embodiment. This example shows the state where a digital camera Degi-γ (C003) is registered as a purchase candidate.

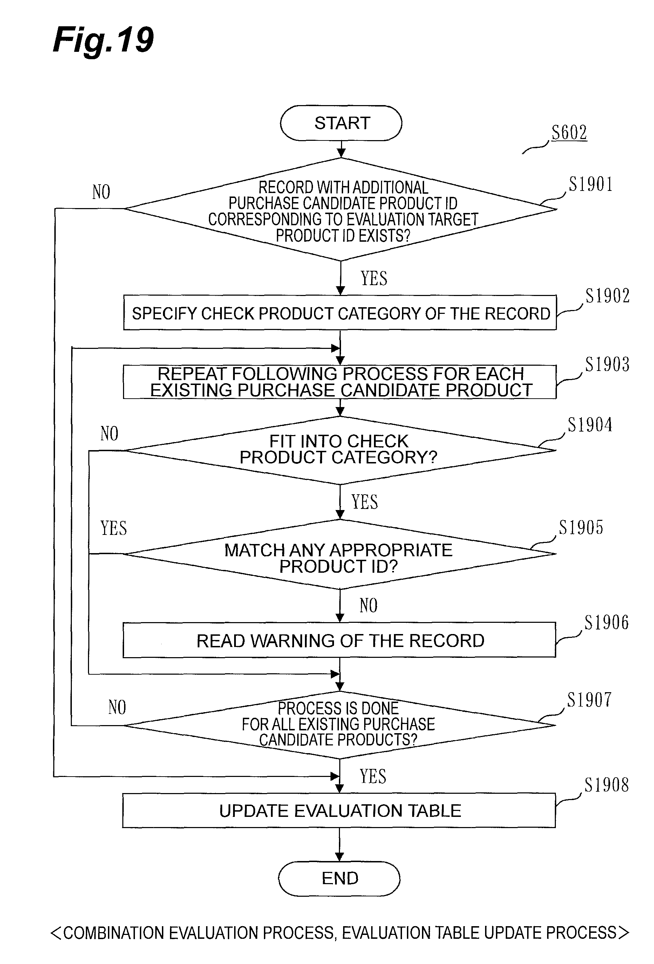

Fig. 19 is a diagram showing a combination evaluation process flow according to the second embodiment. It is determined whether there is a record in which the product ID of an additional purchase candidate product corresponds to the evaluation target product ID (S1901) and, when there is no such record, the process ends. On the other hand, when there is such record, the following process is performed. First, the check product category of the record is specified (S 1902). Then, the following process is repeated for each of the existing purchase candidate products (S1903). When the existing purchase candidate product fits into the check product category (S1904), it is determined whether the product ID of the existing purchase candidate product matches any of appropriate product IDs (S 1905) and, when the product ID of the existing purchase candidate product does not match any appropriate product ID, it is determined to be inappropriate, and the data to call attention for the record is read (S1906). When, on the other hand, the existing purchase candidate product does not fit into the check product category in S 1904 or when it is determined that the product ID of the existing purchase candidate product matches any appropriate product ID in S1905, the process proceeds to S1907, without determining that product ID of the existing purchase candidate product is inappropriate. Then, after the process is done for all of the existing candidates for purchase (S1907), the evaluation table is updated (S1908).

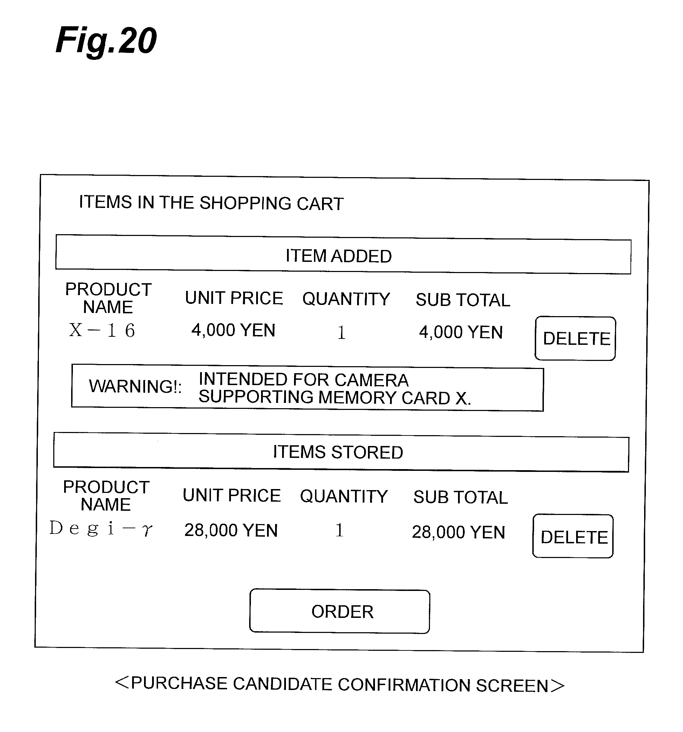

Fig. 20 is a diagram showing an example of a purchase candidate confirmation screen according to the second embodiment. When X-16 (M001) is selected, attention is called that it is a memory card intended for a camera supporting memory card X in relation to Degi-γ (C003). This indicates that the digital camera that has been registered in advance is not suitable for the card that is selected afterward. Note that the data to call attention in Fig. 20 is set at a lower degree of risk compared to that for the generation of chlorine gas.

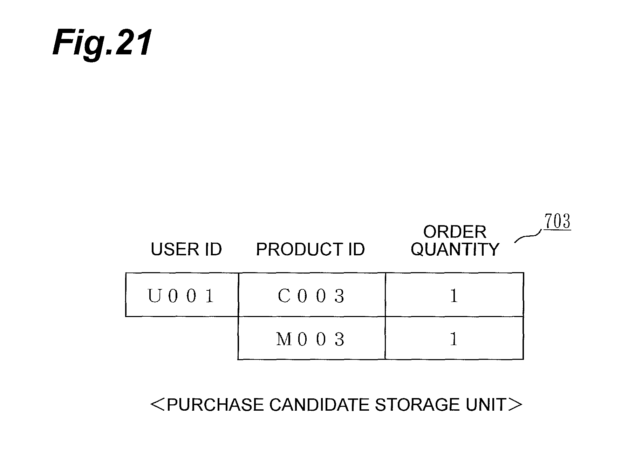

Fig. 21 is a diagram showing an example of a purchase candidate storage unit (after addition of a purchase candidate) according to the second embodiment. In this example, the state where X-16 (M001) has been cancelled, and Y-16 (M003) is selected instead is shown.

### Third Embodiment

In this embodiment, an example of checking a difference in the attributes of products is described.

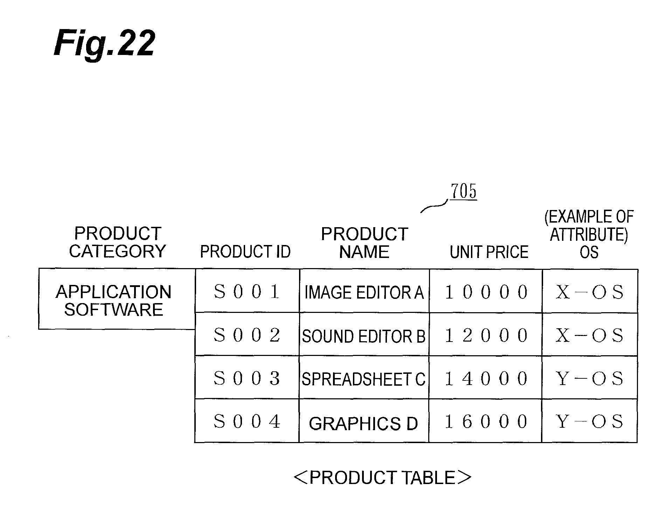

Fig. 22 is a diagram showing an example of a product table according to the third embodiment. As an example of the attribute, an OS to run each product is stored in association with other items.

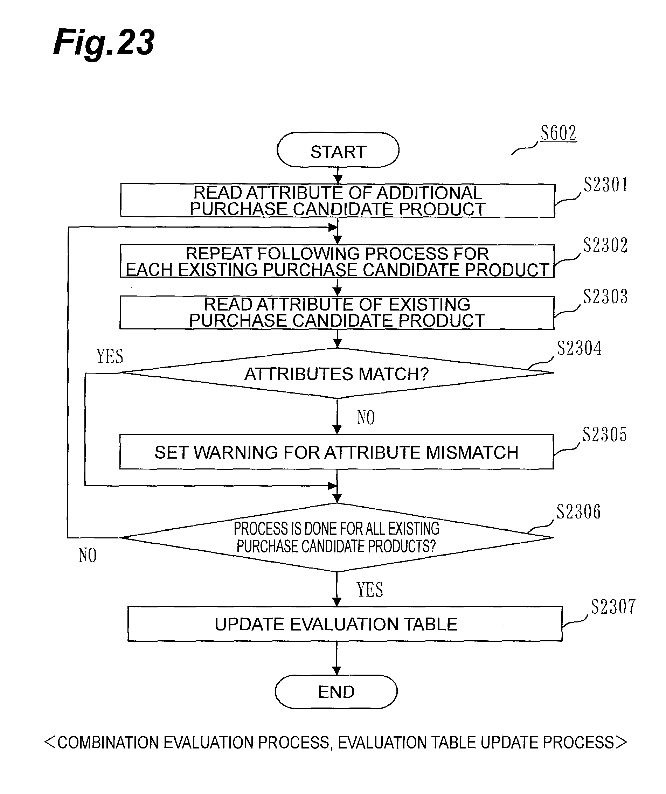

Fig. 23 is a diagram showing a combination evaluation process flow according to the third embodiment. First, the attribute of an additional purchase candidate product is read from a product table 705 (S2301). Then, the following process is repeated for each of the existing purchase candidate products (S2302). The attribute of the existing purchase candidate product is read from the product table 705 (S2303). It is determined whether the attributes of the both products match (S2304) and, when they do not match, data to call attention indicating attribute mismatch is set (S2305). After the process is done for all of the existing purchase candidate products (S2306), the evaluation table is updated (S2307).

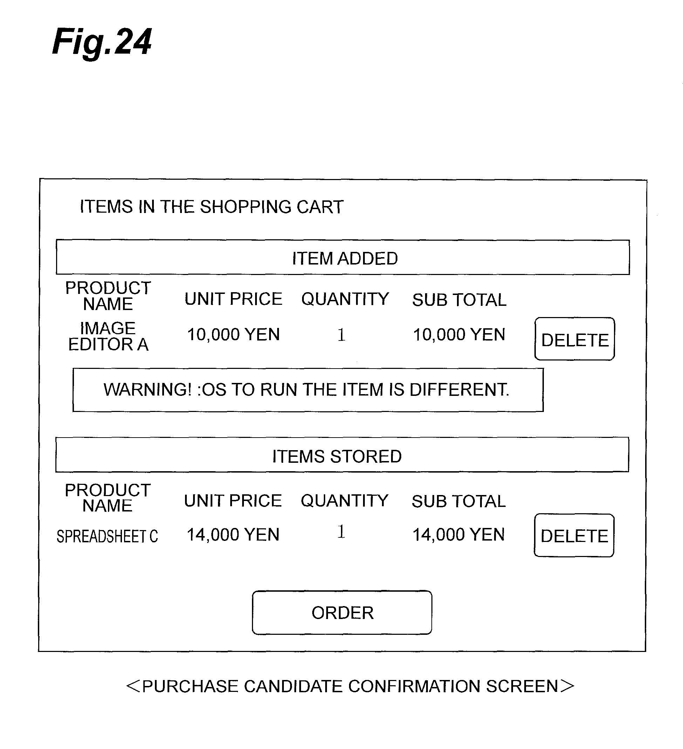

Fig. 24 is a diagram showing an example of a purchase candidate confirmation screen according to the third embodiment. When Image editor A (S001) is selected, attention is called that the OS on which the product runs is different in relation to Spreadsheet C (S003). This indicates that the attribute is different.

### Fourth Embodiment

Although an example of specifying the attribute of a product by a product table is described in the third embodiment, an example of specifying the attribute from screen data of a product page is described in this embodiment.

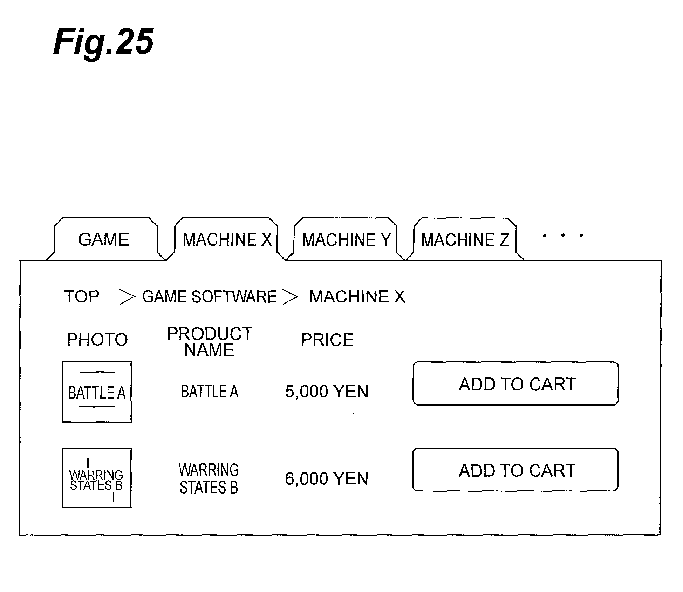

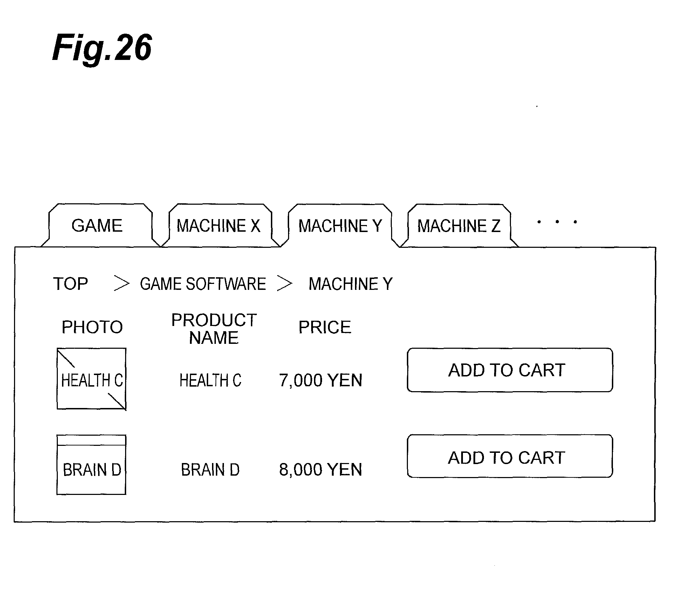

Fig. 25 is a diagram showing an example (first example) of a product page according to the third embodiment. Fig. 26 is a diagram showing an example (second example) of a product page according to the third embodiment. In both examples, a game machine to run each product is displayed on each tag. The information can be read from the source code of the product page screen. When an icon to indicate sending of an additional purchase candidate ("Add to Cart") is clicked, the tag information is read and sent.

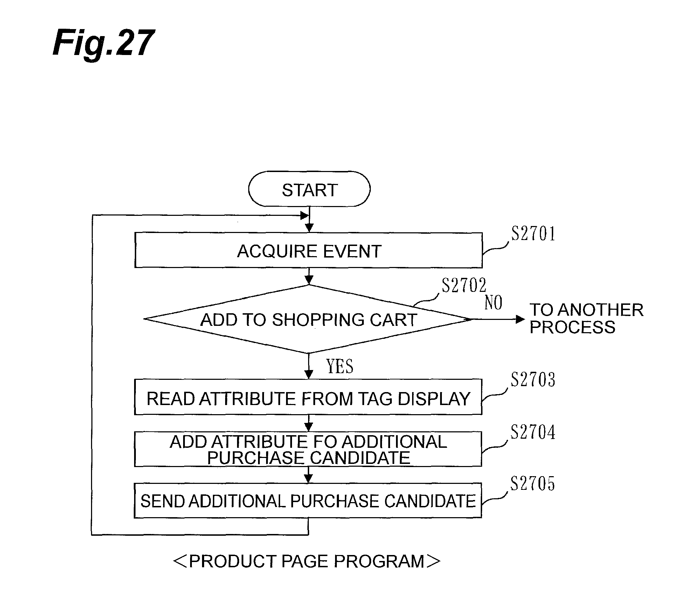

The operation of a program that is attached to the product page screen is described. Fig. 27 is a diagram showing a process flow of a product page program. When an event is acquired (S2701) and the event arises from the icon to indicate sending of an additional purchase candidate ("Add to Cart") (S2702), an attribute is read from tag display (S2703), and the attribute is added to the additional purchase candidate (S2704). Then, the additional purchase candidate containing the attribute is sent to the home shopping server 101 (S2705).

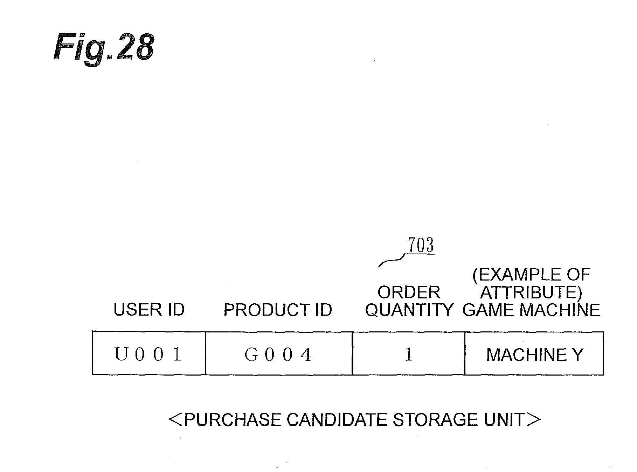

The attribute contained in the purchase candidate sent as above is also stored in the purchase candidate storage unit 703. Fig. 28 is a diagram showing an example of a purchase candidate storage unit (before addition of a purchase candidate) according to the fourth embodiment. As the attribute, a game machine to run each product is associated with other items.

Then, in the evaluation of Fig. 23, it is determined whether the attribute contained in the existing purchase candidate and the attribute contained in the additional purchase candidate match or not (S2304).

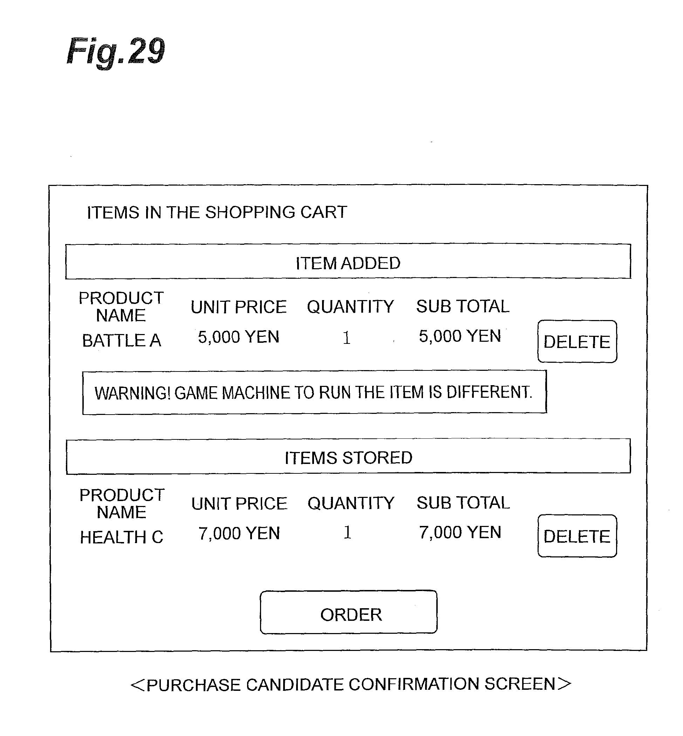

Fig. 29 is a diagram showing an example of a purchase candidate confirmation screen according to the fourth embodiment. At the point of time when Battle A is selected, attention is called that the game machine to run the product is different in relation to Health C. This example also indicates that the attribute is different.

The home shopping server 101 is a computer, and a program causes each element to execute processing. Further, the program may be stored in a storage medium so that it is read from the storage medium by the computer.

### Reference Signs List

101...home shopping server, 102...user terminal, 401...login unit, 402...user table, 403...product A page request receiving unit, 404...product A page transmitting unit, 405...product A page storage unit, 406...product B page request receiving unit, 407...product B page transmitting unit, 701...purchase candidate receiving unit, 702... combination evaluation unit, 703...purchase candidate storage unit, 704...purchase candidate confirmation screen creation unit, 705...product table, 706 ... evaluation table generation unit, 707...purchase candidate confirmation screen transmitting unit, 708...order request receiving unit , 709... order entry registration unit, 710... order entry information storage unit, 711... logout unit

## Claims

1. A home shopping server connectable to a user terminal through Internet, comprising:
a purchase candidate product storage unit that receives input of a purchase candidate product from the user terminal and stores the purchase candidate product;
an evaluation table generation unit that, upon receiving input of the purchase candidate product, generates an evaluation table to evaluate a combination for the purchase candidate product by reference to a product table that stores appropriateness of a combination of purchase candidate products;
a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit;
an attention attracting screen creation unit that, when the combination is evaluated to be inappropriate by the combination evaluation unit, creates an attention attracting screen on which data to call attention is set; and
an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.

2. The home shopping server according to Claim 1, wherein
the combination evaluation unit has an inappropriate product definition table that stores an evaluation target product, an inappropriate product whose combination with the evaluation target product is inappropriate, and data to call attention indicating description of inappropriateness in association with one another, and
when the additional purchase candidate product corresponds to the evaluation target product and the existing purchase candidate product corresponds to the inappropriate product, the combination evaluation unit specifies the associated data to call attention.

3. The home shopping server according to Claim 1, wherein
the combination evaluation unit has an appropriate product definition table that stores an evaluation target product, a check product category for an evaluation of a combination with the evaluation target product, an appropriate product whose combination with the evaluation target product is appropriate, and data to call attention indicating appropriateness of the evaluation target product in association with one another, and
when the additional purchase candidate product corresponds to the evaluation target product, the existing purchase candidate product fits into the check product category, and the existing purchase candidate product does not correspond to the appropriate product, the combination evaluation unit specifies the associated data to call attention.

4. The home shopping server according to Claim 1, wherein
when an attribute of the additional purchase candidate product and an attribute of the existing purchase candidate product are different, the combination evaluation unit specifies data to call attention indicating that the attributes are different.

5. The home shopping server according to Claim 1, further comprising:
a product table that stores an attribute for each product, wherein
the combination evaluation unit specifies an attribute of the additional purchase candidate product and an attribute of the existing purchase candidate product based on the product table.

6. The home shopping server according to Claim 1, further comprising:
a product page storage unit that stores a product page configured to display an attribute of a product as tag information and transmit the tag information together with a product purchase candidate;
a product page request receiving unit that receives a product page request from the user terminal; and
a product page transmitting unit that, when the product page request is received, reads a product page from the product page storage unit and transmits the product page, wherein
the combination evaluation unit specifies an attribute of the additional purchase candidate product and an attribute of the existing purchase candidate product using the attribute contained in the purchase candidate.

7. A purchase candidate product evaluation method executed by a home shopping server connectable to a user terminal through Internet, comprising:
a purchase candidate product storage step of receiving input of a purchase candidate product from the user terminal and storing the purchase candidate product into a purchase candidate product storage unit;
an evaluation table generation step of, upon receiving input of the purchase candidate product, generating an evaluation table to evaluate a combination for the purchase candidate product by reference to a product table that stores appropriateness of a combination of purchase candidate products;
a combination evaluation step of, upon receiving input of an additional purchase candidate product to be added to the purchase candidate product storage unit, evaluating appropriateness of a combination of an existing purchase candidate product stored in the purchase candidate product storage unit and the additional purchase candidate product by reference to the evaluation table generated in the evaluation table generation step;
an attention attracting screen creation step of, when the combination is evaluated to be inappropriate in the combination evaluation step, creating an attention attracting screen on which data to call attention is set; and
an evaluation table update step of, when the combination is evaluated to be appropriate in the combination evaluation step, generating an evaluation table for both purchase candidate products by merging an evaluation table for the existing purchase candidate product and an evaluation table for the additional purchase candidate product by reference to a product table that stores appropriateness of a combination for the additional purchase candidate product.

8. A program causing a computer to function as a home shopping server connectable to a user terminal through Internet, the server comprising:
a purchase candidate product storage unit that receives input of a purchase candidate product from the user terminal and stores the purchase candidate product;
an evaluation table generation unit that, upon receiving input of the purchase candidate product, generates an evaluation table to evaluate a combination for the purchase candidate product by reference to a product table that stores appropriateness of a combination of purchase candidate products;
a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit;
an attention attracting screen creation unit that, when the combination is evaluated to be inappropriate by the combination evaluation unit, creates an attention attracting screen on which data to call attention is set; and
an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.

9. A computer-readable recording medium having a program recorded thereon, the program causing a computer to function as a home shopping server connectable to a user terminal through Internet, the server comprising:
a purchase candidate product storage unit that receives input of a purchase candidate product from the user terminal and stores the purchase candidate product;
an evaluation table generation unit that, upon receiving input of the purchase candidate product, generates an evaluation table to evaluate a combination for the purchase candidate product by reference to a product table that stores appropriateness of a combination of purchase candidate products;
a combination evaluation unit that, upon receiving input of an additional purchase candidate product to be added to the purchase candidate product storage unit, evaluates appropriateness of a combination of an existing purchase candidate product stored in the purchase candidate product storage unit and the additional purchase candidate product by reference to the evaluation table generated by the evaluation table generation unit;
an attention attracting screen creation unit that, when the combination is evaluated to be inappropriate by the combination evaluation unit, creates an attention attracting screen on which data to call attention is set; and
an evaluation table update unit that, when the combination is evaluated to be appropriate by the combination evaluation unit, generates an evaluation table for both purchase candidate products by merging an evaluation table for the existing purchase candidate product and an evaluation table for the additional purchase candidate product by reference to a product table that stores appropriateness of a combination for the additional purchase candidate product.
